Europäisches Patentamt

European Patent Office

Office européen des brevets

(11) Veröffentlichungsnummer : **0 367 160 B1**

(12)

# EUROPÄISCHE PATENTSCHRIFT

(45) Veröffentlichungstag der Patentschrift :
**02.01.92 Patentblatt 92/01**

(21) Anmeldenummer : **89120051.1**

(22) Anmeldetag : **28.10.89**

(51) Int. Cl.⁵ : **B60K 23/08**

(54) Antriebsanordnung für Kraftfahrzeuge.

(30) Priorität : **03.11.88 DE 3837357**

(43) Veröffentlichungstag der Anmeldung :
**09.05.90 Patentblatt 90/19**

(45) Bekanntmachung des Hinweises auf die
Patenterteilung :
**02.01.92 Patentblatt 92/01**

(84) Benannte Vertragsstaaten :
**AT BE CH DE ES FR GB IT LI**

(56) Entgegenhaltungen :
**EP-A- 0 213 654**
**DE-B- 1 026 180**
**DE-B- 1 225 970**
**GB-A- 2 146 961**
**US-A- 4 771 852**

(73) Patentinhaber : **DEERE & COMPANY**
**1 John Deere Road**
**Moline, Illinois 61265 (US)**

(72) Erfinder : **Göbel, Werner**
**Pfarrer-Friederich-Strasse 3**
**W-6700 Ludwigshafen 29 (DE)**

(74) Vertreter : **Feldmann, Bernhard et al**
**DEERE & COMPANY European Office, Patent**
**Department Steubenstrasse 36-42 Postfach**
**503**
**W-6800 Mannheim 1 (DE)**

## Beschreibung

Die Erfindung betrifft eine Antriebsanordnung für Kraftfahrzeuge mit mehrachsigem Antrieb, insbesondere Ackerschlepper, mit wenigstens einer von einer Antriebsmaschine über Wechselgetriebe antreibbaren Achse und mit einer Kupplung, die durch Steuersignale schaltbar ist und der Zuschaltung wenigstens einer weiteren Radachse in den Antriebsstrang dient.

Eine derartige Antriebsanordnung ist durch die DE-C-1026180 bekannt geworden. Bei der bekannten Antriebsanordnung ist eine Wellenkupplung vorgesehen, um die Antriebswellen zweier Achsen miteinander zu verbinden. Die Wellenkupplung wird im Sinne des Verbindens der Antriebswellen automatisch betätigt, sobald die Fahrzeugbremse zur Wirkung gebracht, insbesondere das Bremspedal betätigt wird. Damit wird bei gebremster Fahrt die Antriebs- und Bremskraft automatisch auf alle Laufräder des Fahrzeuges verteilt, auch wenn eine der Radachsen mit keinem gesonderten Bremssystem ausgerüstet ist. Die Wellenkupplung wird hydraulisch betätigt. Bei Bremsbeginn sind die Antriebswellen noch nicht durch die Wellenkupplung miteinander verbunden. Die Verbindung setzt mit leichter Verzögerung ein, die von der Auslegung des Hydrauliksystems und der Viskosität der Hydraulikflüssigkeit abhängt. Bevor die Verbindung wirksam wird, muß die Hydraulikflüssigkeit aus dem die Wellenkupplung betätigenden Zylinder verdrängt werden. Die Viskosität der Hydraulikflüssigkeit ist temperaturabhängig. Insbesondere im winterlichen Betrieb können Verzögerungen in der Grössenordnung von Sekunden auftreten. Bei plötzlichem Bremsen auf nassen oder winterlichen Straßen kann die Verzögerung die nachteilige Auswirkung haben, daß zunächst die mit dem Antriebsstrang verbundenen Räder (Hinterräder) vorzeitig blockieren, bevor die Bremswirkung alle vier Räder erfaßt.

Die mit der Erfindung zu lösende Aufgabe wird darin gesehen, eine Antriebsanordnung für Kraftfahrzeuge der eingangs genannten Art zu schaffen, die eine Zuschaltung wenigstens einer weiteren Radachse in den Antriebsstrang schon zu einem Zeitpunkt ermöglicht, bei dem noch keine Bremsbetätigung erfolgt ist.

Die Aufgabe wird nach der Erfindung dadurch gelöst, daß ein Sensor zur Erfassung der Einstellage einer Betätigungseinrichtung für die Maschinendrehzahleinstellung vorgesehen ist. Dieser Sensor gibt Steuersignale zur Betätigung der Kupplung ab.

Zweckmäßigerweise spricht der Sensor dann an, wenn die Leerlaufdrehzahl der Maschine eingestellt wird. Dies erfolgt beispielsweise, indem das Gaspedal nicht betätigt wird. Allerdings kann durch Einstellung des Handgashebels eine oberhalb der Leerlaufdrehzahl liegende Drehzahl eingestellt sein, so daß der Ansprechpunkt des Sensors durch Beeinflussung des Gaspedals nicht erreichbar ist. Insbesondere für diese Fallgestaltung wird eine weitere erfindungsgemäße Lösung der Aufgabe vorgeschlagen, die darin liegt, daß ein Sensor zur Erfassung der Einstellage der Betätigungseinrichtung einer im Antriebsstrang angeordneten Hauptkupplung vorgesehen ist. Auch hier werden die Steuersignale des Sensors zur Betätigung der Kupplung, die der Zuschaltung einer weiteren Radachse dient, herangezogen.

Diese weitere Lösung kann alternativ oder kumulativ mit der ersten Lösung verwirklicht werden. Die kumulative Lösung, bei der sowohl die Maschinendrehzahl als auch die Lage der Hauptkupplung überwacht wird, ermöglicht es, daß beim Bergabfahren oder Bremsen mit schweren Anhängerlasten die weitere Achse zum Antriebsstrang zugeschaltet wird, bevor gebremst wird.

Bei der Kupplung, die der Zuschaltung einer weiteren Radachse in den Antriebsstrang dient (Zuschaltkupplung), handelt es sich vorzugsweise um eine Lamellenkupplung, die durch ein elektromagnetisch steuerbares Hydraulikventil einrückbar ist. Die Kupplung befindet sich bei stromlosem Zustand des Hydraulikventils in eingerückter Stellung, so daß die weitere Radachse kraftschlüssig mit dem Antriebsstrang verbunden ist. Wird der Elektromagnet des Hydraulikventils an eine Stromquelle angeschlossen, so öffnet die Lamellenkupplung und trennt die weitere Radachse vom Antriebsstrang.

Ackerschlepper, bei denen die Erfindung bevorzugt Anwendung findet, werden durch Verbrennungskraftmaschinen angetrieben. Die Betätigungseinrichtung für die Maschinendrehzahleinstellung ist hier das Gaspedal, ein Handgashebel oder das zugehörige Gestänge. Wird das Gas weggenommen, um die Maschinendrehzahl zu reduzieren, so gibt der Sensor bei Unterschreiten eines vorgebbaren Stellwertes Steuersignale an das Hydraulikventil der Lamellenkupplung ab, die zu einem Einrücken der Kupplung führen. Damit ist bei einer erforderlichen weiteren Verzögerung des Fahrzeuges noch vor der Betätigung der Bremse die weitere Radachse in den Antriebsstrang zugeschaltet, so daß die beschriebenen Nachteile der bekannten Antriebsanordnung vermieden werden können.

Ein weiterer Vorzug der erfindungsgemäßen Lösung ist darin zu sehen, daß bei Betätigung der Lenkbremse keine automatische Zuschaltung der weiteren Radachse erfolgt.

Insbesondere bei dem Fall, bei dem trotz Drehzahlreduzierung der Schwellwert des Drehzahlsensors nicht unterschritten wird (z.B. infolge einer relativ hohen Einstellung des Handgashebels), entfaltet die zweite Lösungsvariante der vorliegenden Erfindung ihre besonderen Vorzüge. Hiernach erfolgt ein Einrücken der Lamellenkupplung auch dann, wenn die Hauptkupplung des Fahrzeuges betätigt wird. Da vor einem Bremsmanöver die Hauptkupplung meistens betätigt wird, ist die weitere Radachse schon vor Betätigung der Bremse kraftschlüssig mit dem Antriebsstrang des Fahrzeuges verbunden.

Als Sensoren werden vorzugsweise Näherungsschalter verwendet, die bei Annäherung der Betätigungsorgane an eine vorgebbare Einstellage Steuersignale an die Kupplung abgeben. Der Näherungsschalter des Drehzahlsensors kann dabei so eingestellt werden, daß er im Leerlaufbereich der Antriebsmaschine anspricht. Vorzugsweise wird hierbei der Ansprechpunkt nicht auf den unteren Leerlaufpunkt, der bei einem Ackerschlepper beispielsweise bei 800 U/min liegt, festgelegt, sondern bei einem etwas höheren Wert, z.B. 1000 U/min. Dies hat den Vorteil, daß dann, wenn die Leerlaufstellung durch Schmutz, Korrosion oder Einstellung des Handgashebels nicht erreicht wird, auch wenn der Fuß vom Gaspedal genommen wird, dennoch der Drehzahlsensor anspricht und die Lamellenkupplung einrückt.

Als Näherungsschalter kommt vorzugsweise ein Reedschalter in Betracht, bei dem Schaltkontakte durch das Magnetfeld eines Magneten beeinflußbar sind. Bei den Magneten handelt es sich bevorzugt um Permanentmagneten, die auf dem Gashebel, dem Kupplungspedalhebel bzw. den zugehörigen Verbindungsgestängen befestigbar sind. Die in einer abgeschlossenen Kapsel angeordneten Reedkontakte werden an geeigneter Stelle an einem starr mit dem Fahrzeugchassis verbundenen Teil befestigt. Diese Lösung ist sehr preiswert und einfach zu realisieren.

Einer weiteren bevorzugten Ausgestaltung der Erfindung zufolge ist dem Sensor ein Zeitverzögerungsglied nachgeordnet, so daß die Kupplung nicht unmittelbar bei Überschreiten des das Steuersignal auslösenden Schwellwertes eingerückt wird. Vielmehr erfolgt die Kupplungsbetätigung mit einer Zeitverzögerung von vorzugsweise bis zu 1,5 Sekunden. Durch diese Zeitverzögerung wird vermieden, daß jedesmal dann, wenn das Gas weggenommen und-/oder die Kupplung betätigt wird, um den Gang des Wechselgetriebes zu ändern, die Lamellenkupplung einrückt und die weitere Radachse kraftschlüssig mit dem Antriebsstrang verbindet.

Weitere vorteilhafte Ausgestaltungen der Erfindung sind den Unteransprüchen zu entnehmen.

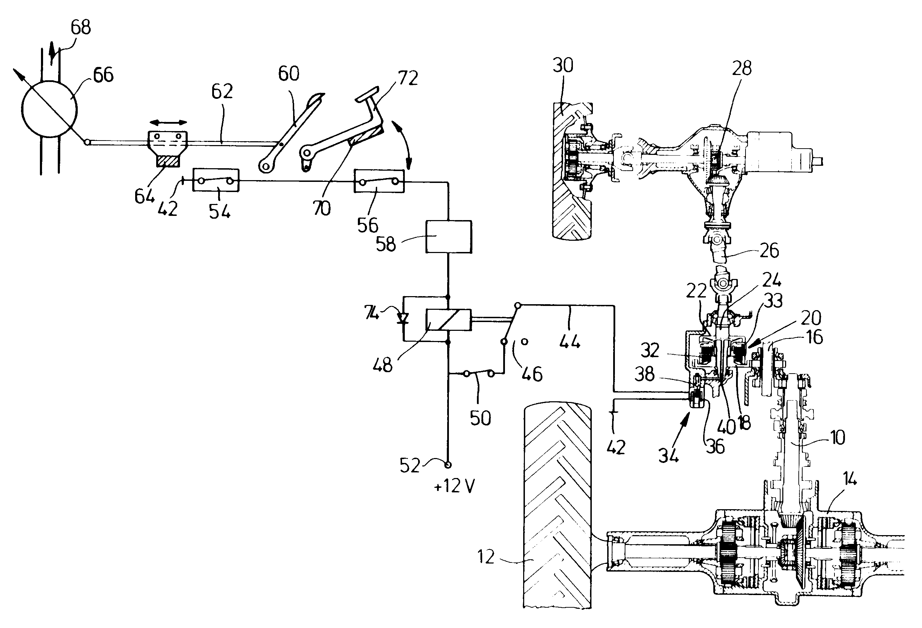

Anhand der Zeichnung, die ein Ausführungsbeispiel der Erfindung zeigt, sollen die Erfindung sowie weitere Vorteile und vorteilhafte Ausgestaltungen der Erfindung erläutert und näher beschrieben werden.

Die einzige Figur zeigt eine Antriebsanordnung für einen Ackerschlepper mit Vierradantrieb. Die Antriebskraft gelangt vom nicht dargestellten Motor über die nicht dargestellte Hauptkupplung zum Schaltgetriebe, dessen Hauptwelle 10 in der Figur angedeutet ist. Die Hinterräder 12 des Traktors sind kraftschlüssig über eine Ausgleichsgetriebeanordnung 14 mit der Hauptwelle 10 verbunden. Ferner ist die Hauptwelle 10 über eine Zwischenwelle 16 kraftschlüssig mit der Kupplungsnabe 18 einer Lamellenkupplung 20 verbunden. Die Kupplungstrommel 22 der Lamellenkupplung 20 liegt auf einer Kupplungswelle 24, die ihrerseits über eine Gelenkwelle 26 und ein Vorderachsdifferential 28 kraftschlüssig mit den Vorderrädern 30 in Verbindung steht.

Bei eingeschaltetem Frontantrieb pressen Tellerfedern 32 das Lamellenpaket 33 der Lamellenkupplung 20 zusammen, so daß die Kraft von der Kupplungsnabe 18 über das Lamellenpaket 33 zur Kupplungstrommel 22 und der damit fest verbundenen Kupplungswelle 24 übertragen wird.

Die Lamellenkupplung 20 läßt sich durch ein als Magnetventil ausgebildetes Steuerventil 34 schalten. Wird die Magnetspule 36 durch Anlegen an eine Stromquelle erregt, so verschiebt ein Magnetanker einen Steuerschieber 38 in der Weise, daß Drucköl aus einer nicht dargestellten Zuflußleitung über eine Leitung 40 durch die Kupplungswelle 24 hinter einen Betätigungskolben der Lamellenkupplung 20 gelangt, wodurch der Betätigungskolben gegen einen Druckring bewegt wird. Der Druckring wirkt hierbei auf die Tellerfedern 32 und entspannt diese. Die Lamellenkupplung 20 ist jetzt geöffnet und überträgt in diesem Zustand keine Kraft von der Hauptwelle 10 auf die Vorderräder 30. Wird der Stromzufluß zur Magnetspule 36 unterbrochen, so verschiebt sich der Steuerschieber 38 des Magnetventils 34 und unterbricht den Ölzufluß zur Lamellenkupplung 20, wodurch diese die Hauptwelle 10 mit den Vorderrädern 30 kraftschlüssig verbindet.

Der eine elektrische Anschluß der Magnetspule 34 liegt auf Fahrzeugmasse 42. Der andere Anschluß 44 ist über einen Schaltkontakt 46 eines Relais 48 und einen von Hand betätigbaren Schalter 50 mit dem Pluspol 52 der Fahrzeugbatterie verbunden.

Die Spule des Relais 48 liegt mit zwei Reedkontakten 54, 56 in Serie zwischen der Fahrzeugmasse 42 und dem Pluspol 52 der Fahrzeugbatterie. Ferner ist in diesen Serienkreis ein Zeitverzögerungsglied 58 eingefügt. Die Reedkontakte 54, 56 sind geschlossen, sofern sie keinem Magnetfeld aus gesetzt sind. In diesem Fall fließt durch den Serienkreis ein Strom, der die Spule des Relais 48 erregt und den Schaltkontakt 46 des Relais 48 in die dargestellte Position bringt, so daß die Spule 36 des Magnetventils 34 mit der Fahrzeugbatterie in Verbindung steht und die Lamellenkupplung ausschaltet, so daß die kraftschlüssige Verbindung zwischen Hauptwelle 10 und Vorderrädern 30 unterbrochen wird.

Der Reedkontakt 54 ist in der Nähe des durch ein Gaspedal 60 betätigbaren Gestänges 62 angeordnet. Das Gestänge 62 trägt einen Dauermagneten 64. Das Gestänge 62 steht mit einem Einstellmechanismus einer Kraftstoffzufuhreinrichtung 66 in Verbindung. Bei der Kraftstoffzufuhreinrichtung 66 kann es sich beispielsweise um eine Einspritzpumpe oder um einen Vergaser handeln. Durch das Gaspedal 60 und das Gestänge 62 läßt sich die Menge des Kraftstoffes 68 regulieren, die der Verbrennungskraftmaschine zugeführt wird. Die relative räumliche Lage des Reedkontaktes 54 und des Permanentmagneten 64 ist so gewählt, daß geringfügig oberhalb der Leerlaufeinstellung des Gaspedals 60, d.h. das Gaspedal 60 ist nur wenig aus seiner Ruhelage verstellt, der Reedkontakt 54 durch das Magnetfeld des Permanentmagneten 64 geöffnet wird. Wird das Gaspedal heruntergetreten, so entfernt sich der Permanentmagnet 64 vom Reedkontakt 54 und letzterer schließt.

Der andere Reedkontakt 56 befindet sich im Einflußbereich eines weiteren Permanentmagneten 70, der am Kupplungspedal 72 zur Betätigung der Hauptkupplung befestigt ist. Wird das Kupplungspedal 72 heruntergedrückt, so nähert sich der Permanentmagnet 70 an den Reedkontakt 56 an und öffnet infolge des Magnetfeldes den Reedkontakt 56. Wenn das Kupplungspedal 72 wieder seine Ruhelage einnimmt, reicht das Magnetfeld des Permentmagneten 70 nicht mehr aus, um den Reedkontakt 56 geöffnet zu halten. Der Reedkontakt 56 bleibt bei nicht betätigtem Kupplungspedal 72 geschlossen.

Ist wenigstens einer der beiden Reedkontakte 54 oder 56 geöffnet, so wird der Stromfluß in dem Steuerkreis unterbrochen. Das Relais 48 fällt ab und öffnet den Kontakt 46. Hierdurch wird auch die Spule 36 des Magnetventils 34 stromlos, so daß die Lamellenkupplung 20 eingerückt wird und die Vorderräder 30 mit der Hauptwelle 10 kraftschlüssig verbindet.

Das Zeitglied 58 bewirkt, daß der Stromfluß durch den Steuerkreis bei Öffnen eines der Reedkontakte 54 oder 56 nicht sofort unterbrochen wird, sondern noch etwa eine Sekunde aufrecht erhalten wird. Hierdurch fällt das Relais 48 nicht unmittelbar nach Öffnen eines der Reedkontakte 54 oder 56 ab.

Die Spule des Relais 48 ist durch eine Schutzdiode 74 überbrückt.

Die Zuschaltung der Vorderräder 30 an die Hauptwelle 10 kann auch von Hand vorgenommen werden. Hierfür ist der Kontakt 50 vorgesehen. Der Kontakt 50 kann beispielsweise durch einen in der Fahrzeugkabine angeordneten Hebel betätigt werden. Wird der Schalter 50 geöffnet, so wird die Spule 36 des Magnetventils 34 stromlos, die Lamellenkupplung 20 wird eingeschaltet und die Vorderräder 30 werden kraftschlüssig mit dem Antriebsstrang verbunden. Durch Betätigung des Schalters 50 läßt sich somit jederzeit der Vierradantrieb einschalten.

**Patentansprüche**

1. Antriebsanordnung für ein Kraftfahrzeug mit mehrachsigem Antrieb, insbesondere Ackerschlepper, mit wenigstens einer von einer Antriebsmaschine über Wechselgetriebe antreibbaren Radachse und mit einer Kupplung, die durch Steuersignale schaltbar ist und der Zuschaltung wenigstens einer weiteren Radachse in den Antriebsstrang dient, dadurch gekennzeichnet, daß ein Sensor (54) zur Erfassung der Einstellage einer Betätigungseinrichtung (60) für die Maschinendrehzahleinstellung vorgesehen ist, der Steuersignale zur Betätigung der Kupplung (20) abgibt.

2. Antriebsanordnung nach Anspruch 1, dadurch gekennzeichnet, daß der Sensor als Näherungsschalter (54) ausgebildet ist, der bei einer Einstellage der Betätigungseinrichtung (60) für die Maschinendrehzahleinstellung im Leerlaufbereich Steuersignale an die Kupplung (20) abgibt, durch welche die Kupplung (20) die weitere Radachse zum Antriebsstrang zuschaltet.

3. Antriebsanordnung nach Anspruch 1 oder 2, dadurch gekennzeichnet, daß der Sensor aus einem am beweglichen Einstellgestänge (62) der Kraftstoffzufuhreinrichtung (66) angebrachten Magneten (64) und einem feststehenden Reedschalter (54) besteht.

4. Antriebsanordnung für Kraftfahrzeug mit mehrachsigem Antrieb, insbesondere Ackerschlepper, mit wenigstens einer von einer Antriebsmaschine über Wechselgetriebe und Hauptkupplung antreibbaren Radachse und mit einer weiteren Kupplung, die durch Steuersignale schaltbar ist und der Zuschaltung wenigstens einer weiteren Radachse in den Antriebsstrang dient, wahlweise nach einem der Ansprüche 1 bis 3, dadurch gekennzeichnet, daß ein Sensor (56) zur Erfassung der Einstellage der Betätigungseinrichtung (72) der Hauptkupplung vorgesehen ist, der Steuersignale zur Betätigung der weiteren Kupplung (20) abgibt.

5. Antriebsanordnung nach Anspruch 4, dadurch gekennzeichnet, daß der Sensor als Näherungsschalter (56) ausgebildet ist, der bei einer Einstellage der Betätigungseinrichtung (72) der Hauptkupplung, bei der ein Auskuppeln erfolgt, Steuersignale an die weitere Kupplung (20) abgibt, durch welche die weitere Kupplung (20) die weitere Radachse zum Antriebsstrang zuschaltet.

6. Antriebsanordnung nach Anspruch 4 oder 5, dadurch gekennzeichnet, daß der Sensor aus einem am Kupplungspedal (72) oder -gestänge angebrachten Magneten (70) und einem feststehenden Reedschalter (56) besteht.

7. Antriebsanordnung nach einem der Ansprüche 1 bis 6, dadurch gekennzeichnet, daß der Sensor zur Erfassung der Einstellage der Kraftstoffzufuhreinrichtung (66) und/oder der Sensor zur Erfassung der Einstellage der Betätigungseinrichtung (72) der Hauptkupplung je einen Schalter (54, 56) enthalten, daß die Schalter (54, 56) mit einem elektrischen Relais (48) in einen durch eine Fahrzeugbatterie gespeisten Stromkreis in Reihe angeordnet sind und daß ein Schaltkontakt (46) des Relais (48) im Stromkreis eines die zusätzliche Kupplung (20) steuernden, elektromagnetisch betätigbaren Hydraulikventils (34) liegt.

8. Antriebsanordnung nach einem der Ansprüche 1 bis 7, dadurch gekennzeichnet, daß dem Sensor (54, 56) ein Zeitverzögerungsglied (58) nachgeordnet ist.

9. Antriebsanordnung nach Anspruch 8, dadurch gekennzeichnet, daß die Zeitverzögerung des Zeitverzögerungsgliedes (58) zwischen 0 und 1,5 Sekunden liegt.

## Claims

1. Transmission arrangement for a vehicle with drive on a plurality of axles, especially an agricultural tractor, with at least one wheel axle drivable from a drive engine through a change-speed gear and with a clutch which is operable by control signals and serves for the engagement of at least one further wheel axle in the drive train, characterized in that there is provided a sensor (54) for determining the adjusted position of an operating device (60) for the engine speed adjustment, which sensor provides control signals for actuation of the clutch (20).

2. Transmission arrangement according to claim 1, characterized in that the sensor is formed as a proximity switch (54) which provides control signals to the clutch (20), through which the clutch (20) switches the further wheel axle into the drive train at an adjusted position of the operating device (60) for the engine speed adjustment into the idling range.

3. Transmission arrangement according to claim 1 or 2, characterized in that the sensor consists of a magnet (64) fitted on the movable adjusting rod (62) of the fuel supply device (66) and a fixed reed switch (54).

4. Transmission arrangement for a vehicle with drive on a plurality of axles, especially an agricultural tractor, with at least one wheel axle drivable from a drive engine through a change-speed gear and main clutch and with a further clutch which is operable by control signals and serves for the engagement of at least one further wheel axle in the drive train, selectively according to one of claims 1 to 3, characterized in that there is provided a sensor (56) for determining the adjusted position of the operating device (72) of the main clutch, which sensor provides control signals for actuation of the further clutch (20).

5. Transmission arrangement according to claim 4, characterized in that the sensor is formed as a proximity switch (56) which provides control signals to the further clutch (20), through which the further clutch (20) switches the further wheel axle into the drive train at an adjusted position of the operating device (72) of the main clutch in which disengagement occurs.

6. Transmission arrangement according to claim 4 or 5, characterized in that the sensor consists of a magnet (70) fitted to the clutch pedal (72) or linkage and a fixed reed switch (56).

7. Transmission arrangement according to one of claims 1 to 6, characterized in that the sensor for determining the ajusted position of the fuel supply device (66) and/or and sensor for determining the ajusted position of the operating device (72) of the main clutch include in each case a switch (54, 56), in that the switches (54, 56) are connected in series to an electrical relay (48) in a circuit supplied by the vehicle battery and in that a switch contact (46) of the relay (48) lies in a circuit of an electromagnetically operated hydraulic valve (34) controlling the additional clutch (20).

8. Transmission arrangement according to one of claims 1 to 7, characterized in that a time delay element (58) is associated with the sensor (54, 56).

9. Transmission arrangement according to claim 8, characterized in that the time delay of the time delay element (58) lies between 0 and 1.5 seconds.

## Revendications

1. Dispositif d'entraînement pour un véhicule automobile comportant un entraînement à plusieurs essieux, notamment un tracteur agricole, possédant au moins un essieu pouvant être entraîné par une machine motrice par l'intermédiaire d'une transmission, et un embrayage, qui peut être commuté au moyen de signaux de commande et qui est utilisé pour enclencher au moins un autre essieu dans la chaîne motrice, caractérisé en ce qu'il est prévu un capteur (54) servant à détecter la position de réglage d'un dispositif d'actionnement (60) pour le réglage de la vitesse de rotation de la machine et qui délivre des signaux de commande pour actionner l'embrayage (20).

2. Dispositif d'entraînement selon la revendication 1, caractérisé en ce que le capteur est agencé sous la forme d'un interrupteur de proximité (54) qui, dans une position de réglage du dispositif d'actionnement (60) pour le réglage de la vitesse de rotation de la machine dans la gamme du ralenti, envoie à l'embrayage (20) des signaux de commande qui amènent l'embrayage (20) à enclencher l'autre essieu dans la chaîne motrice.

3. Dispositif d'entraînement selon la revendication 1 ou 2, caractérisé en ce que le capteur est constitué par un aimant (64) monté sur la tringlerie mobile de réglage (62) du dispositif (66) d'alimentation en carburant, et un interrupteur Reed fixe (54).

4. Dispositif d'entraînement pour un véhicule automobile comportant un dispositif d'entraînement à plusieurs essieux, notamment un tracteur agricole, possédant au moins un essieu pouvant être entraîné par une machine motrice au moyen d'une transmission et d'un embrayage principal, et un autre embrayage qui peut être commuté par des signaux de commande et sert à enclencher au moins un autre essieu dans la chaîne motrice, au choix selon l'une des revendications 1 à 3, caractérisé en ce qu'il est prévu un capteur (56) servant à détecter la position de réglage du dispositif d'actionnement (72) de l'embrayage principal et qui délivre des signaux de commande pour actionner l'autre embrayage (20).

5. Dispositif d'entraînement selon la revendication 4, caractérisé en ce que le capteur est réalisé sous la forme d'un interrupteur de proximité, qui, dans une position de réglage du dispositif d'actionnement (72) de l'embrayage principal, dans laquelle se produit un débrayage, envoie à l'autre embrayage (20) des signaux de commande, grâce auxquels l'autre embrayage (20) enclenche l'autre essieu dans la chaîne motrice.

6. Dispositif d'entraînement selon la revendication 4 ou 5, caractérisé en ce que le capteur est constitué par un aimant (70) monté sur une pédale d'embrayage (72) ou sur une tringlerie d'embrayage et un interrupteur Reed fixe (56).

7. Dispositif d'entraînement selon l'une des revendications 1 à 6, caractérisé en ce que le capteur servant à détecter la position de réglage du dispositif (66) d'amenée du carburant et/ou le capteur servant à détecter la position de réglage du dispositif d'actionnement (72) de l'embrayage principal contiennent chacun un interrupteur (54, 56), que les interrupteurs (54, 56) sont branchés en série dans un circuit alimenté par une batterie du véhicule, et qu'un contact de commutation (46) du relais (48) est disposé dans le circuit d'une soupape hydraulique (34) qui commande l'embrayage supplémentaire (20) et peut être actionné par voie électromagnétique.

8. Dispositif d'entraînement selon l'une des revendications 1 à 7, caractérisé en ce qu'un circuit de retardement (58) est branché en aval du capteur (54, 56).

9. Dispositif d'entraînement selon la revendication 8, caractérisé en ce que le retard produit par le circuit de retardement (58) est compris entre 0 et 1,5 seconde.